# FASCICULE DE BREVET EUROPEEN

(11) **EP 0 570 645 B1**
(45) Date de publication et mention de la délivrance du brevet: **20.11.1996**
(21) Numéro de dépôt: 92401365.9
(22) Date de dépôt: 20.05.1992
(51) Int. Cl.: C10B 53/00, B01J 8/06, B01D 53/86

(54) **Système et procédé de traitement par thermolyse sous vide des produits liquides ou gazeux dont le rejet est préjudiciable pour l'environnement**
System und Verfahren zur Vakuumthermolyse von flüssigen oder gasförmigen Produkten, deren Deponie umweltschädlich ist
System and process for the vacuum thermolysis of liquid or gaseous products whose disposal is damaging to the environment

(43) Date de publication de la demande: 24.11.1993
(73) Titulaire: SOCIETE FRANCAISE DE THERMOLYSE, F-13580 La Fare-les-Oliviers (FR)
(72) Inventeur: Chaussonnet, Pierre, F-13100 Aix-en-Provence (FR)
(74) Mandataire: Rinuy, Santarelli

(56) Documents cités:
- EP-A- 0 295 454
- GB-A- 121 146
- GB-A- 763 461

## Description

La présente invention concerne un système et un procédé pour le traitement par thermolyse sous vide de produits liquides ou gazeux dont le rejet est préjudiciable pour l'environnement. Traditionnellement ces produits dangereux pour l'environnement sont, soit stockés, soit traités par incinération ; dans le premier cas, le danger potentiel subsiste et ne peut que s'aggraver avec la corrosion possible des emballages. Dans le second cas, les températures du traitement par incinération sont très élevées (supérieures à 1000°C) et entraînent une usure rapide des équipements et donc un coût d'exploitation très élevé ; par ailleurs les produits gazeux du traitement par incinération sont évacués dans l'atmosphère avant tout contrôle ce qui ne permet pas de donner toutes les garanties requises quant à la non pollution de l'environnement.

Le document EP-0.295.454 propose une décomposition par réduction au sein d'une masse fluide enrobant les particules d'un lit fluidisé. Cette solution a toutefois, notamment, l'inconvénient de nécessiter le maintien d'un lit fluidisé.

L'invention a pour objet de remédier aux inconvénients précités grâce à un système de traitement de produits liquides ou gazeux propre à permettre, dès une température modérée (typiquement 500°C à 900°C selon les produits à traiter), une décomposition suffisante pour permettre la fixation et l'élimination des composants nocifs susceptibles d'être préjudiciables à l'environnement.

L'invention propose à cet effet que le traitement se fasse par thermolyse sous vide (pression subatmosphérique typiquement inférieure à 500 mbars, par exemple 300 mbars environ) et que les produits de décomposition soient épurés en continu à la sortie. De préférence, ces produits de décomposition sont contrôlés en continu à la sortie pour être soit rejetés, soit recyclés pour un nouveau cycle de traitement.

Le fonctionnement à des températures inférieures à 1000°C n'induit pas d'usure marquée du système de traitement, dont la durée de vie est ainsi prolongée et le coût de fonctionnement réduit.

Plus précisément l'invention propose un système pour le traitement de liquides et de gaz dont le rejet est préjudiciable pour l'environnement, caractérisé en ce qu'il comporte en un seul réacteur de thermolyse, une chambre d'introduction de produits liquides ou gazeux à traiter ; un opercule intermédiaire laissant passer des gaz à traiter ; une chambre de thermolyse dans laquelle est placé un ensemble thermo-catalytique composé de résistances électriques alimentées par une source de puissance électrique et d'une matière thermo-catalytique, l'ensemble thermo-catalytique étant porté par passage de courant électrique à une température propre à permettre la décomposition catalytique du mélange gazeux, l'énergie complémentaire nécessaire à la décomposition thermolytique des produits à traiter étant apportée par la décomposition catalytique du mélange air/oxygène-gaz combustibles ; une chambre d'épuration contenant des éléments propres à retenir de façon sélective des éléments chimiques libérés par la décomposition thermo-catalytique et que l'on veut éliminer ; et pour maintenir le vide de fonctionnement dans la chambre de thermolyse, connectés à la sortie du réacteur, un groupe de pompage précédé d'un moyen de lavage adapté à parfaire l'épuration et refroidir les gaz à un niveau de température admissible pour le groupe de pompage.

Selon des dispositions préférées de l'invention éventuellement combinées :
- ce système est muni d'une conduite d'alimentation en un milieu gazeux combustible débouchant dans la chambre de thermolyse ou en amont de celle-ci,
- la chambre d'introduction est équipée d'un système de chauffage pour vaporiser la partie liquide des produits à traiter introduits dans la chambre et mettre le mélange gazeux à une température de consigne,
- l'opercule intercalaire porte des orifices calibrés pour assurer un transfert régulier de produits gazeux vers la chambre de thermolyse, avec un débit déterminé par les conditions de température et de pression de la chambre d'introduction et de la pression de la chambre,
- la chambre d'épuration comporte un garnissage de matériaux réactifs destiné à être traversé par les gaz décomposés afin d'y éliminer de façon sélective des radicaux dont on souhaite l'élimination,
- ces matériaux réactifs sont mis en place sous forme de cartouches amovibles pour des facilités de manipulation et de régénération après usage,
- il comporte des moyens de modulation de la température d'une masse catalytique contenue dans la chambre de thermolyse,
- le niveau à vide obtenu dans la chambre de thermolyse est régulé, à partir des indications d'un manomètre fixé au réacteur en aval de l'opercule intermédiaire, par modulation du débit de pompage du groupe de pompage,
- le réacteur est calorifugé pour limiter les déperditions calorifiques, et l'opercule intercalaire, un ensemble thermo-catalytique contenu dans la chambre de thermolyse, et des matériaux actifs contenus dans la chambre d'épuration, sont montés de façon amovible,
- ce système comporte, en aval de la sortie du réacteur, un analyseur de gaz commandant par action sur des vannes une dérivation des gaz traités vers une voie d'évacuation ou vers l'entrée dudit réacteur.

L'invention propose également un procédé de traitement de liquides et de gaz dont le rejet est préjudiciable pour l'environnement, selon lequel on introduit ces liquides et ces gaz dans une chambre d'introduction dans laquelle on vaporise ces liquides, on fait passer ces liquides vaporisés et ces gaz dans une chambre de thermolyse dans laquelle on maintient un vide de fonctionnement, en contact avec une masse catalytique portée à une température propre à catalyser une décomposition thermolytique de ces liquides vaporisés et de ces gaz, on fait passer ces liquides vaporisés et ces gaz dans une chambre d'épuration contenant des éléments propres à retenir de façon sélective certains prédéterminés des composés libérés par la décomposition et, on contrôle le vide de fonctionnement par le débit avec lequel on pompe les produits gazeux à la sortie de la chambre d'épuration, après les avoir lavés et refroidis.

Selon d'autres dispositions préférées :
- on lave les produits gazeux sortant de la chambre d'épuration, on teste la présence dans ceux-ci de composants nocifs puis, soit on rejette ces produits, soit on les recycle dans la chambre d'introduction.

En accord avec les conditions détaillées ci-dessus, le système selon l'invention offre les avantages suivants : il est applicable à toute quantité de liquides et de gaz, soit en jouant sur la section du réacteur et la longueur de la chambre de thermolyse, soit en mettant en parallèle autant de réacteurs que nécessaire. Le système selon l'invention ne produit aucune contamination par les gaz qui sont purgés des composants nocifs, d'une part dans la chambre d'épuration et d'autre part dans le laveur situé en amont du groupe de pompage ; les coûts d'installation et d'exploitation sont faibles par rapport à ceux des systèmes de traitement par incinération.

Des objets, caractéristiques et avantages de l'invention ressortent de la description qui suit, donnée à titre d'exemple non limitatif, en regard des dessins annexés sur lesquels :
- la figure 1 est un schéma général d'une installation de traitement de déchets liquides ou gazeux conforme à l'invention,
- la figure 2 est un schéma en coupe axiale du réacteur de thermolyse de l'installation de la figure 1, et
- la figure 3 est un schéma d'une variante de réalisation de ce réacteur.

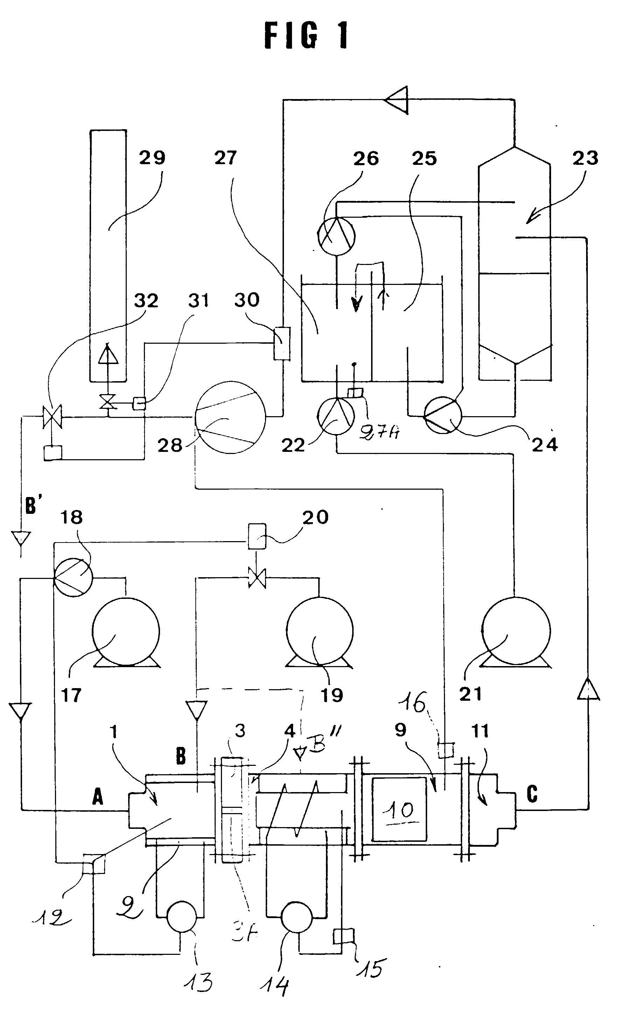

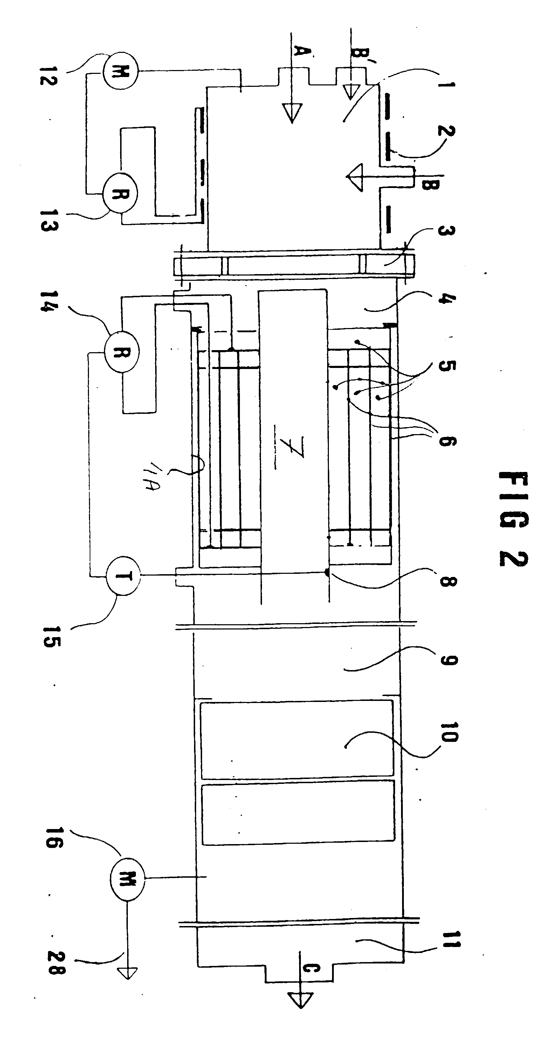

Dans la figure 1 le repère A désigne l'entrée des liquides (et gaz) à traiter qui arrivent dans une chambre d'introduction 1 à partir de fûts ou d'un réservoir de stockage 17, par l'action d'une pompe doseuse 18. L'alimentation de cette chambre peut, en variante, être faite par gravité.

En amont de la chambre d'introduction le réacteur est équipé d'appareillages classiques non représentés interdisant le reflux des produits vers l'extérieur, ou l'entrée d'air vers l'intérieur, comme par exemple, sans être limitatif, une jambe barométrique pour éviter l'entrée d'air vers l'intérieur et des clapets anti-retour pour éviter le reflux du liquide et des gaz vers l'extérieur.

Le repère B désigne l'arrivée d'un mélange gazeux combustible (air/oxygène-gaz combustible) dans la chambre 1 provenant d'un réservoir 19 en passant par un manomètre-détendeur 20 dont le débit est asservi au débit de la pompe doseuse 18. La chambre d'introduction 1 est munie d'un moyen de chauffage, ici une résistance électrique 2 placée contre la paroi, à l'extérieur de l'enceinte, en vue de vaporiser la partie liquide des produits à traiter, d'assurer la mise en température des vapeurs ainsi formées ainsi que leur mélange avec l'air et/ou l'oxygène arrivant en B. L'intensité du courant électrique de chauffage de cette résistance 2 est régulée en 13 à partir d'une mesure en 12 de la pression de vapeur, dans cette chambre 1, du mélange (liquide vaporisé-air-gaz) dont le point de consigne est fixé pour chaque mélange traité.

A la sortie de la chambre 1 est fixé de façon étanche un opercule intercalaire 3 comportant des trous calibrés 3A par lesquels est assuré le transfert du mélange gazeux et des produits à traiter gazeux ou vaporisés vers une chambre de thermolyse 4 comportant un thermoréacteur ou ensemble thermo-catalytique à laquelle cet opercule est fixé de façon étanche ; le débit de transfert est fonction de la température et de la pression de la chambre 1 et de la pression de la chambre 4. Il est régulé par action sur ces paramètres ainsi que sur le débit de la pompe doseuse 18.

En variante de réalisation, l'alimentation en mélange gazeux combustible de cette chambre de thermolyse 4 est assurée, non plus par la conduite B débouchant en amont de cette chambre 4, mais par une conduite B" (indiquée en pointillés) débouchant directement dans cette chambre 4.

Cette chambre de thermolyse 4 communique de façon étanche avec une chambre d'épuration 9 fermée en son extrémité aval par un fond d'enceinte 11 et destinée à épurer les produits de la décomposition thermolytique réalisée dans la chambre 4. Les produits de la décomposition sortent par une sortie repérée C ménagée dans le fond 11.

Ces chambres ou éléments 1, 4, 9 et 11 sont assemblés de façon étanche, par joints et brides (voire par soudure) en sorte de former un réacteur.

La chambre de thermolyse 4 et la chambre d'épuration 9 sont maintenues en vide permanent (pression subatmosphérique typiquement inférieure à 800 mbars), sous une pression absolue qui peut varier selon la nature des produits à traiter mais que l'on fixe, à titre d'exemple, à 300 mbars.

Ces produits de décomposition pénètrent dans une colonne de lavage ou "scrubber" 23 où ils sont lavés et refroidis à l'eau par arrosage intensif. L'eau de lavage est évacuée par une pompe 24 dont le débit est asservi à celui de la pompe d'arrosage 26 effectuant l'arrosage dans la colonne 23. Le débit de cette pompe d'arrosage 26 est fonction du volume et de la température des gaz de décomposition pénétrant dans la colonne 23. L'eau de lavage pompée en 24 à la sortie basse de la colonne 23 est envoyée d'abord dans une installation de décantation et de refroidissement 25 puis dans une installation de neutralisation 27 où est injectée, selon le besoin, une solution neutralisante, soude par exemple, prélevée dans un bac 21 par une pompe doseuse 22 dont le débit est régulé par les indications d'un appareil de contrôle 27A, Ph-mètre par exemple. Dans l'exemple ici représenté, c'est dans la partie supérieure de ce bac 27 qu'est prélevée l'eau d'arrosage pompée par la pompe 26.

A la sortie haute de la colonne 23 les gaz lavés et refroidis sont aspirés par un groupe de pompage 28 (par exemple équipé de pompes à vide et d'échangeurs de chaleur) qui maintient l'ensemble des volumes 4-9-23 à un niveau de vide souhaité (typiquement 300 mbars - voir ci-dessus -). Le fonctionnement du groupe de pompage 28, et donc le niveau de vide de l'installation, sont ici régulés à partir des indications de mesure de pression relevées dans la chambre 9 par un capteur 16.

Avant d'entrer dans le groupe de pompage 28 les gaz traversent un analyseur de gaz 30 qui, en fonction des résultats, en actionnant des vannes 31 et 32 disposés en aval du groupe de pompage 28, dirige les gaz soit dans une cheminée d'évacuation 29 soit vers une seconde entrée B' de la chambre 1 pour y être recyclés et traités à nouveau.

On appréciera que la colonne de lavage a une double fonction puisque, d'une part elle poursuit l'épuration, d'autre part elle refroidit les gaz à un niveau de température admissible pour le groupe de pompage 28.

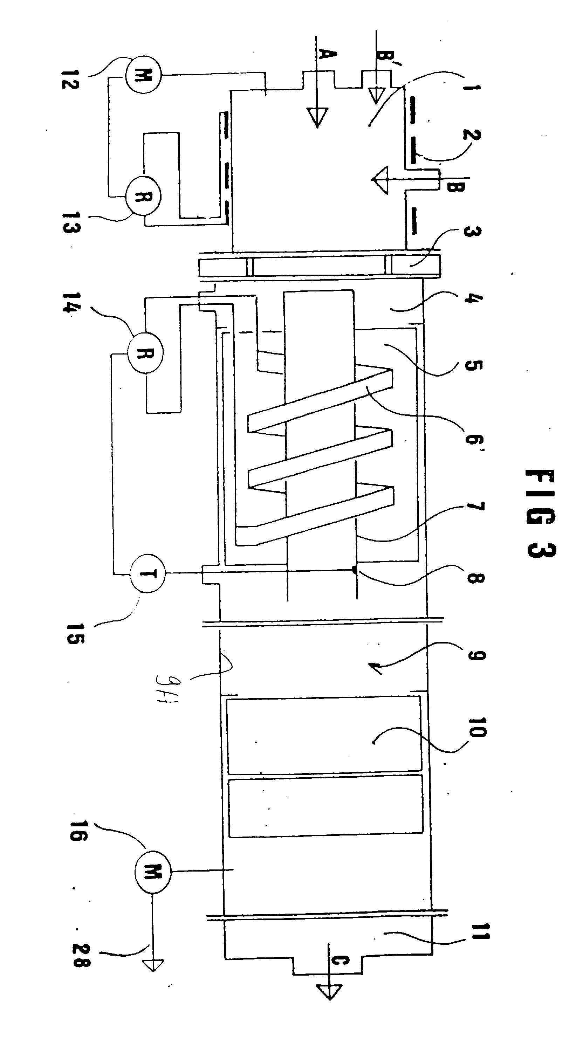

La figure 2 représente à titre purement illustratif et non limitatif une forme de réalisation industrielle du réacteur de thermolyse regroupant les chambres 1, 4 et 9. La représentation du réacteur est ici faite en position horizontale mais le réacteur peut fonctionner de la même façon en position verticale. Le choix de la position peut être fait en fonction des possibilités d'implantation.

On retrouve en A l'entrée des liquides qui arrivent, comme cela a été dit, soit par gravité soit par l'action d'une pompe doseuse, en B l'arrivée du mélange air/oxygène-gaz combustibles et en B' l'arrivée des gaz à traiter ou à recycler après passage dans le groupe de pompage 28. La chambre d'introduction 1 est chauffée par les résistances électriques 2 en sorte de vaporiser les liquides à traiter et mettre en température le mélange gazeux. La régulation du chauffage est assurée par le régulateur de puissance électrique 13 à partir des mesures de pression données par le manomètre 12.

Les trous de l'opercule intercalaire 3, par lesquels le mélange gazeux chaud passe de la chambre d'introduction 1 dans la chambre de thermolyse 4, sont répartis sur des circonférences et ont une section de passage déterminée en sorte de garantir le débit du mélange gazeux à la valeur voulue en fonction des paramètres de réglage : pression et température amont (en 1), pression aval (en 4 notamment). La définition de l'opercule intercalaire dépend des caractéristiques physiques et chimiques des produits à traiter. Le montage de cet opercule entre des brides appartenant respectivement aux chambres 1 et 4 permet un remplacement facile de cet opercule quand on change les produits.

Aux repères 5, 6 et 7 se trouvent les éléments constitutifs du thermoréacteur (ou thermolyseur) proprement dit dans lequel s'effectue la réaction de décomposition thermo-catalytique : une masse poreuse catalytique 5 dans laquelle circulent le mélange gazeux et les produits à traiter, des éléments électriques de chauffage, ici des tubes électriques radiants 6 traversant longitudinalement cette masse catalytique, destinés à mettre celle-ci à la température de réaction de décomposition et qui apportent l'énergie complémentaire nécessaire pour assurer la dissociation moléculaire des gaz à l'aide de cette masse 5, et un tube 7 sur lequel cette masse réactive 5 est montée et qui est bouché (ici du côté amont) pour éviter la circulation des gaz en dehors de la masse poreuse 5. Un thermocouple 15 muni d'une prise de température 8 donne des indications de température permettant de contrôler la cinétique chimique de décomposition par régulation de l'apport d'énergie électrique par un régulateur de puissance 14. L'ensemble thermoréacteur est mis en place de façon amovible mais étanche dans l'enceinte de thermolyse 4A de façon à éviter les contournements de la masse 5 par les gaz le long de cette enceinte 4A.

A la figure 2 les tubes radiants 6 sont concentriques (trois tubes emboîtés les uns dans les autres) et sont liés à une source de puissance électrique constituée par le régulateur 14 par des entretoises 6A, ici disposées en leurs extrémités amont et aval, qui en assurent la liaison électrique et la rigidité mécanique. Ces tubes forment ainsi conjointement une unique résistance chauffante chauffant de façon homogène la masse 5.

Les tubes radiants de la chambre de thermolyse sont remplis d'éléments de garnissage constituant la masse poreuse 5, tels que l'écoulement gazeux soit suffisamment ralenti et turbulent pour favoriser l'échange thermique ; la nature du ou des matériaux du garnissage est déterminée en fonction des caractéristiques de stabilité des produits, en sorte de pouvoir catalyser la décomposition de ceux-ci.

Dans la figure 3 qui montre une variante de conception du thermoréacteur 1, les tubes radiants sont remplacés par une résistance chauffante 6' circulant en hélice dans la masse catalytique 5, autour du tube central 7, qui met cette masse catalytique 5 à la température souhaitée pour déclencher les réactions de décomposition. Les éléments de cette figure 3 similaires à ceux de la figure 2 portent les mêmes chiffres de référence. La masse poreuse 5 est ici avantageusement confinée dans une enceinte elle-même poreuse (non représentée).

L'énergie nécessaire à la décomposition thermo-catalytique des produits à traiter est apportée par l'élévation de température du mélange gazeux dans la chambre d'introduction, par la mise en température des tubes radiants et des résistances électriques et par la décomposition catalytique du mélange air/oxygène-gaz combustibles dans la matière de l'ensemble thermo-catalytique.

Le contrôle de la cinétique des réactions de décomposition dans le thermolyseur est obtenu par la régulation du chauffage électrique à partir des données des thermocouples implantés dans le réacteur et par mise en oeuvre de systèmes classiques de régulation du courant électrique, par exemple des systèmes à thyristors.

L'enceinte 9A de la chambre d'épuration 9 contient des cartouches 10 (ici deux cartouches successives) d'éléments actifs dont le rôle est de retenir de façon physico-chimique les radicaux chimiques (notamment halogènes) issus de la décomposition thermolytique et que l'on veut éliminer. Ces éléments actifs sont déterminés en fonction des produits que l'on traite.

Les cartouches 10 occupent toute la section interne de l'enceinte 9A ; elles sont amovibles et sont changées quand l'épuration, d'après les indications données par l'analyseur de gaz 30, devient insuffisante. Elles peuvent alors être régénérées puis remises en place. Les cartouches successives peuvent être de nature différente pour fixer des radicaux chimiques différents. On peut ainsi effectuer une épuration sélective et progressive. C'est ici en aval des cartouches 10 qu'est situé le manomètre 16 dont les indications de niveau du vide permet de régler la pression à la valeur souhaitée par action sur le débit du groupe de pompage 28. Par la sortie C du fond 11 du réacteur sortent des gaz décomposés et épurés.

Le réacteur catalytique 1 est calorifugé sur toute sa longueur entre A et C pour minimiser les pertes thermiques.

A titre d'exemple, pour le traitement du "1-1-Dichloroéthane" arrivant avec un débit moyen de 1 kg/s, on réalise un opercule percé d'un trou ayant une section de 0,35 cm². La masse catalytique a une longueur de 1,2 m et la section de passage des gaz est de 400 cm². Elle est à base d'oxyde de platine. Les cartouches d'épuration sont à base de dolomie pour fixer les composés de chlore qui se dégagent lors de la décomposition catalytique.

Le mélange combustible est, dans ce cas d'application, introduit directement dans la chambre de thermolyse au droit du catalyseur, par la conduite B'. Il est composé de 960 g/s d'oxygène et de 540 g/s de propane C3H8.

La pression visée dans la chambre 1 est de 3 bars et la température de consigne est de 480 K.

Le niveau de vide dans la chambre de thermolyse 4 est de 0,6 bar et la masse 5 est maintenue à une température de l'ordre de 1000 K.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Système pour le traitement de liquides et de gaz dont le rejet est préjudiciable pour l'environnement, caractérisé en ce qu'il comporte en un seul réacteur de thermolyse, une chambre d'introduction (1) de produits liquides ou gazeux à traiter ; un opercule intermédiaire (3) laissant passer des gaz à traiter (3) ; une chambre de thermolyse (4) dans laquelle est placé un ensemble thermo-catalytique (5-6) composé de résistances électriques (6, 6') alimentées par une source de puissance électrique (14) et d'une matière thermo-catalytique (5), l'ensemble thermo-catalytique étant porté par passage de courant électrique à une température propre à permettre la décomposition catalytique du mélange gazeux, l'énergie complémentaire nécessaire à la décomposition thermolytique des produits à traiter étant apportée par la décomposition catalytique du mélange air/oxygène-gaz combustibles ; une chambre d'épuration (9) contenant des éléments propres à retenir de façon sélective des éléments chimiques libérés par la décomposition thermo-catalytique et que l'on veut éliminer ; et pour maintenir le vide de fonctionnement dans la chambre de thermolyse (4), connectés à la sortie du réacteur, un groupe de pompage (28) précédé d'un moyen de lavage (23) adapté à parfaire l'épuration et refroidir les gaz à un niveau de température admissible pour le groupe de pompage.

2. Système selon la revendication 1, caractérisé en ce qu'il est muni d'une conduite (B, B") d'alimentation en un milieu gazeux combustible débouchant dans la chambre de thermolyse ou en amont de celle-ci.

3. Système selon la revendication 1 ou la revendication 2, caractérisé en ce que la chambre d'introduction (1) est équipée d'un système de chauffage (2) pour vaporiser la partie liquide des produits à traiter introduits dans la chambre (1) et mettre le mélange gazeux à une température de consigne.

4. Système selon l'une quelconque des revendications 1 à 3, caractérisé en ce que l'opercule intercalaire (3) porte des orifices calibrés pour assurer un transfert régulier de produits gazeux vers la chambre de thermolyse (4), avec un débit déterminé par les conditions de température et de pression de la chambre d'introduction (1) et de la pression de la chambre (4).

5. Système selon l'une quelconque des revendications 1 à 4, caractérisé en ce que la chambre d'épuration (9) comporte un garnissage de matériaux réactifs (10) destiné à être traversé par les gaz décomposés afin d'y éliminer de façon sélective des radicaux dont on souhaite l'élimination.

6. Système selon la revendication 5, caractérisé en ce que ces matériaux réactifs sont mis en place sous forme de cartouches amovibles pour des facilités de manipulation et de régénération après usage.

7. Système selon l'une quelconque des revendications 1 à 6, caractérisé en ce qu'il comporte des moyens (14, 15) de modulation de la température d'une masse catalytique (5) contenue dans la chambre de thermolyse.

8. Système selon l'une quelconque des revendications 1 à 7, caractérisé en ce que le niveau de vide obtenu dans la chambre de thermolyse (4) est régulé, à partir des indications d'un manomètre (16) fixé au réacteur en aval de l'opercule intermédiaire, par modulation du débit de pompage du groupe de pompage (28).

9. Système selon l'une quelconque des revendications 1 à 8, caractérisé en ce que le réacteur est calorifugé pour limiter les déperditions calorifiques, et l'opercule intercalaire (3), un ensemble thermo-catalytique (5, 6, 7) contenu dans la chambre de thermolyse, et des matériaux actifs (10) contenus dans la chambre d'épuration, sont montés de façon amovible.

10. Système selon l'une quelconque des revendications 1 à 9, caractérisé en ce que ce système comporte, en aval de la sortie du réacteur, un analyseur de gaz commandant par action sur des vannes (31, 32), une dérivation des gaz traités vers une voie d'évacuation (29) ou vers l'entrée (A) dudit réacteur.

11. Procédé de traitement de liquides et de gaz dont le rejet est préjudiciable pour l'environnement, selon lequel on introduit ces liquides et ces gaz dans une chambre d'introduction (1) dans laquelle on vaporise ces liquides, on fait passer ces liquides vaporisés et ces gaz dans une chambre de thermolyse (4) dans laquelle on maintient un vide de fonctionnement, en contact avec une masse catalytique portée à une température propre à catalyser une décomposition thermolytique de ces liquides vaporisés et de ces gaz, on fait passer ces liquides vaporisés et ces gaz dans une chambre d'épuration (9) contenant des éléments propres à retenir de façon sélective certains prédéterminés des composés libérés par la décomposition et, on contrôle le vide de fonctionnement par le débit avec lequel on pompe les produits gazeux à la sortie de la chambre d'épuration, après les avoir lavés et refroidis.

12. Procédé selon la revendication 11, caractérisé en ce qu'on lave les produits gazeux sortant de la chambre d'épuration, on teste la présence dans ceux-ci de composants nocifs puis, soit on rejette ces produits, soit on les recycle dans la chambre d'introduction.

## Patentansprüche

1. System für die Behandlung von Flüssigkeiten und Gasen, deren Deponie umweltschädlich ist, **dadurch gekennzeichnet**, daß es in einem einzigen Thermolyse-Reaktor eine Beladekammer (1) für die zu behandelnden flüssigen oder gasförmigen Produkte, einen Zwischendeckel (3), der die zu behandelnden Gase durchläßt, eine Thermolysekammer (4), in welcher eine thermo-katalytische Einheit (5-6) angebracht ist, die aus von einer Quelle (14) elektrischer Leistung gespeisten elektrischen Widerständen (6, 6') und aus einem thermo-katalytischen Werkstoff (5) zusammengesetzt ist, wobei die thermo-katalytische Einheit mittels Durchfließen von elektrischem Strom auf einer geeigneten Temperatur gehalten wird, um die katalytische Zersetzung der gasförmigen Mischung zu gestatten, und wobei die ergänzende Energie, die für die Thermolyse der zu behandelnden Produkte erforderlich ist, durch die katalytische Zersetzung der Mischung aus Luft/Sauerstoff und brennbaren Gasen geliefert wird, eine Reinigungskammer (9), welche geeignete Elemente zum selektiven Zurückhalten von chemischen Elementen aufweist, die durch die thermo-katalytische Zersetzung freigesetzt wurden und die man eliminieren möchte, und eine Pumpgruppe (28) zur Aufrechterhaltung des Betriebsvakuums in der Thermolysekammer (4) umfaßt, wobei die Pumpgruppe an den Ausgang des Reaktors angeschlossen und ihr eine Wascheinrichtung (23) vorgeschaltet ist, die dazu bestimmt ist, die Reinigung zu vollenden und die Gase auf ein für die Pumpgruppe zulässiges Temperaturniveau abzukühlen.

2. System nach Anspruch 1, dadurch gekennzeichnet, daß es eine Zuführleitung (B, B") für ein brennbares gasförmiges Medium aufweist, die in die Thermolysekammer oder stromaufwärts derselben mündet.

3. System nach Anspruch 1 oder 2, dadurch gekennzeichnet, daß die Beladekammer (1) mit einem Heizsystem (2) ausgerüstet ist, um den flüssigen Anteil der zu behandelnden und in die Kammer (1) eingeführten Produkte zu verdampfen und die gasförmige Mischung auf einer eingestellten Temperatur zu halten.

4. System nach einem der Ansprüche 1 bis 3, dadurch gekennzeichnet, daß der Zwischendeckel (3) kalibrierte Öffnungen aufweist, um eine regelmäßige Überleitung gasförmiger Produkte zur Thermolysekammer (4) in einer durch die Temperatur- und Druckbedingungen der Beladekammer (1) und die Druckbedingungen der Kammer (4) festgelegten Menge sicherzustellen.

5. System nach einem der Ansprüche 1 bis 4, dadurch gekennzeichnet, daß die Reinigungskammer (9) eine Bestückung mit reaktiven Materialien (10) aufweist, die dazu bestimmt ist, daß sie von den anfallenden Gasen durchlaufen wird, damit dort in selektiver Weise Radikale eliminiert werden, deren Elimination man wünscht.

6. System nach Anspruch 5, dadurch gekennzeichnet, daß die reaktiven Materialien in Form von auswechselbaren Patronen für Einrichtungen zur Handhabung und zur Regeneration nach der Benutzung eingesetzt werden.

7. System nach einem der Ansprüche 1 bis 6, dadurch gekennzeichnet, daß es Mittel (14,15) zur Modulation der Temperatur einer katalytischen Masse (5) aufweist, die in der Thermolysekammer enthalten ist.

8. System nach einem der Ansprüche 1 bis 7, dadurch gekennzeichnet, daß das in der Thermolysekammer (4) herrschende Vakuumniveau anhand der Anzeigen eines Manometers (16), das am Reaktor stromabwärts des Zwischendeckels befestigt ist, durch Modulation der Pumpleistung der Pumpgruppe (28) reguliert wird.

9. System nach einem der Ansprüche 1 bis 8, dadurch gekennzeichnet, daß der Reaktor isoliert ist, um die kalorischen Verluste zu begrenzen, und daß der Zwischendeckel (3), eine thermo-katalytische Einheit (5,6,7), die in der Thermolysekammer enthalten ist, und aktive Materialien (10), die sich in der Reinigungskammer befinden, auswechselbar angebracht sind.

10. System nach einem der Ansprüche 1 bis 9, dadurch gekennzeichnet, daß dieses System stromabwärts vom Auslaß des Reaktors ein Gasanalysegerät umfaßt, das durch eine Betätigung von Ventilen (31,32) eine Ableitung der behandelten Gase zu einer Auslaßleitung (29) oder zum Einlaß (A) des Reaktors steuert.

11. Verfahren zur Behandlung von Flüssigkeiten und Gasen, deren Deponie umweltschädlich ist, bei dem man diese Flüssigkeiten und Gase in eine Beladungskammer (1) einführt, in der man die Flüssigkeiten verdampft, wonach man die verdampften Flüssigkeiten und die Gase in eine Thermolysekammer (4) überführt, in der man ein Betriebsvakuum aufrechterhält, und bei dem man in Kontakt mit einer katalytischen Masse, die auf einer geeigneten Temperatur gehalten wird, um eine thermolytische Zersetzung dieser verdampften Flüssigkeiten und Gase zu katalysieren, die verdampften Flüssigkeiten und die Gase in eine Reinigungskammer (9) strömen läßt, die geeignete Elemente enthält, um in selektiver Weise einige vorbestimmte der durch den Zerfall freigesetzten Bestandteile zurückzuhalten, und man das Betriebsvakuum über die Leistung steuert, mit der man die gasförmigen Produkte zum Auslaß der Reinigungskammer pumpt, nachdem sie gewaschen und abgekühlt wurden.

12. Verfahren nach Anspruch 11, dadurch gekennzeichnet, daß man die gasförmigen Produkte wäscht, die die Reinigungskammer verlassen, das Vorhandensein schädlicher Anteile in ihnen überprüft und sie anschließend entweder abläßt oder in die Beladungskammer rezykliert.

## Claims

1. System for processing liquids and gases whose disposal is detrimental to the environment, characterised in that it includes in a single thermolysis reactor, a chamber (1) into which liquid or gas products to be processed are fed, an intermediate disk (3) allowing gases to be processed to pass through it, a thermolysis chamber (4) containing a thermo-catalytic system (5-6) comprising electric elements (6, 6') connected to an electrical power supply (14) and a thermo-catalytic material (5), the thermo-catalytic system being heated electrically to a temperature enabling catalytic decomposition of the gas mixture, the additional energy required for thermolytic decomposition of the products to be processed being obtained by catalytic decomposition of the air/oxygen-combustible gas mixture; a purification chamber (9) in which chemical elements released by the thermo-catalytic decomposition and to be eliminated are selectively retained; and, to maintain the vacuum in the thermolysis chamber (4), connected to the outlet of the reactor, a pumping set (28) preceded by washing means (23) adapted to purify further and cool the gases to a temperature compatible with the pumping set.

2. System according to claim 1 characterised in that it includes a combustible gaseous medium feed pipe (B, B") discharging into the thermolysis chamber or at the upstream end thereof.

3. System according to claim 1 or claim 2 characterised in that the feed chamber (1) is provided with a heating system (2) for vaporising the liquid part of products to be processed introduced into the chamber (1) and heating the gaseous mixture to a set point temperature.

4. System according to any one of claims 1 to 3 characterised in that the intermediate disk (3) has orifices of calibrated size for regular transfer of gaseous products to the thermolysis chamber (4) at a flowrate determined by the temperature and pressure conditions in the feed chamber (1) and the pressure in the chamber (4).

5. System according to any one of claims 1 to 4 characterised in that the purification chamber (9) includes a lining (10) of reactive materials adapted to have the decomposed gases flow through them in order to eliminate selectively radicals to be eliminated.

6. System according to claim 5 characterised in that said reactive materials are installed in the form of removable cartridges for ease of manipulation and for regeneration after use.

7. System according to any one of claims 1 to 6 characterised in that it includes means (14, 15) for modulating the temperature of a catalytic mass (5) contained in the thermolysis chamber.

8. System according to any one of claims 1 to 7 characterised in that the hardness of the vacuum obtained in the thermolysis chamber (4) is controlled in accordance with indications of a pressure gauge (16) fixed to the reactor on the downstream side of the intermediate disk, by modulation of the flowrate of the pumping set (28).

9. System according to any one of claims 1 to 8 characterised in that the reactor is thermally insulated to reduce heat losses and the intermediate disk (3), a thermo-catalytic system (5, 6, 7) contained in the thermolysis chamber and active materials (10) contained in the purification chamber are installed removably.

10. System according to any one of claims 1 to 9 characterised in that it includes on the downstream side of the reactor outlet a gas analyser controlling valves (31, 32) to route the processed gases either to a disposal path (29) or to the entry (A) of said reactor.

11. Process of processing liquids and gases whose disposal is detrimental to the environment, in which said liquids and said gases are fed into a feed chamber (1) in which said liquids are vaporised, said vaporised liquids and said gases are passed into a thermolysis chamber (4) in which a vacuum is maintained in operation, in contact with a catalytic mass heated to a temperature adapted to catalyse thermolytic decomposition of said vaporised liquids and said gases, said vaporised liquids and said gases are passed into a purification chamber (9) containing elements adapted to retain selectively predetermined substances released by decomposition, and the vacuum is controlled in operation by the flowrate at which the gaseous products are pumped at the exit from the purification chamber after washing and cooling them.

12. Process according to claim 11 characterised in that the gaseous products leaving the purification chamber are washed, tested for the presence of harmful substances and then either disposed of or recycled into the feed chamber.
